# EUROPEAN PATENT APPLICATION

(11) **EP 2 760 195 A1**
(43) Date of publication of application: **30.07.2014**
(21) Application number: 13195875.3
(22) Date of filing: 05.12.2013
(51) Int. Cl.: H04N 5/232, H04N 5/225

(54) **User terminal and image processing method for recognizing user in user terminal**

(30) Priority: 23.01.2013 KR 20130007478
(71) Applicant: Samsung Electronics Co., Ltd, Gyeonggi-do 443-742 (KR)
(72) Inventor: Sohn, Jae-Sik, 443-742 Gyeonggi-do (KR); Lee, Ki-Huk, 443-742 Gyeonggi-do (KR); Yoon, Young-Kwon, 443-742 Gyeonggi-do (KR)
(74) Representative: Birchenough, Lewis

(57) **Abstract**

A user terminal includes: a first camera (151) and a second camera (152) photographing a subject; and a controller (110) photographing a user using the second camera (152) upon photographing through the first camera (151) to thus recognize the user, and performing predetermined image processing on an image photographed through the first camera (151) according to the result of the user recognition. Therefore, by recognizing a user and performing image processing on a photographed image based on the result of the user recognition, it is possible to protect a user's copyright for photographed images and also to use user information for various purposes by associating the user information with photographed images.

## Description

### TECHNICAL FIELD

The present disclosure relates generally to a user terminal. More specifically, the present disclosure relates to a user terminal for performing image processing, such as inserting a watermark into a photographed image, encoding a photographed image, classifying and storing a photographed image, transmitting a photographed image to share it, and the like, using a user recognition technology, and a method thereof.

### BACKGROUND

Lately, user terminals such as a mobile device (for example, a mobile phone, a smart phone, or a table PC) include at least one camera, and provide a function of creating still images or moving images by photographing subjects using the camera. Accordingly, users can create images by photographing subjects through user terminals anytime or anywhere, and images created by a user terminal may be stored in the user terminal or transmitted to an external device.

Images created by a user terminal can be considered as digital works produced by a user. Accordingly, a user may claim a copyright or ownership for still images or moving images created through his/her user terminal to protect the still images or moving images, and also charge for providing the images to other people.

However, since neither a method for determining who is a person that has created images by photographing subjects through a user terminal nor a method for associating photographed images with a user have not yet been developed, there are difficulties in protecting a true author of images created by a user terminal.

If a user terminal recognizes a user upon photographing and performs image processing on the photographed image based on the result of the user recognition, it will be possible to protect a user's copyright for the photographed image, and also to use user information for various purposes by associating the user information with the image.

The above information is presented as background information only to assist with an understanding of the present disclosure. No determination has been made, and no assertion is made, as to whether any of the above might be applicable as prior art with regard to the present disclosure.

### SUMMARY

To address the above-discussed deficiencies, it is a primary object to provide a user terminal for recognizing a user upon photographing to protect a copyright for a photographed image, and an image processing method in which the user terminal performs image processing using user recognition.

Another aspect of the present disclosure is to provide a user terminal for recognizing a user upon photographing, and encoding a photographed image or inserting a watermark into the photographed image according to user information acquired through the user recognition, and an image processing method in which the user terminal performs image processing using user recognition.

Another aspect of the present disclosure is to provide a user terminal for recognizing a user upon photographing, and storing a photographed image in a predetermined storage area according to user information or user expression information acquired through the user recognition, and an image processing method in which the user terminal performs image processing using user recognition.

Another aspect of the present disclosure is to provide a user terminal for recognizing a user upon photographing, and transmitting a photographed image to a predetermined sharing device according to user information acquired through the user recognition to share the photographed image with the predetermined sharing device, and an image processing method in which the user terminal performs image processing using user recognition.

Another aspect of the present disclosure is to provide a user terminal for recognizing a user upon image processing, and providing the user with a right for image processing only when user information included in the image is identical to user information acquired through the user recognition, and an image processing method in which the user terminal performs image processing using user recognition.

Another aspect of the present disclosure is to provide a user terminal for recognizing a user upon image processing, and setting the corresponding image to a preferred or non-preferred image according to the user's expression, and an image processing method in which the user terminal performs image processing using user recognition.

At least one of the aspects as described above may be achieved by the following components.

In accordance with an aspect of the present disclosure, there is provided a user terminal including: a first camera and a second camera photographing a subject; and a controller photographing a user using the second camera upon photographing through the first camera to thus recognize the user, and performing predetermined image processing on an image photographed through the first camera according to the result of the user recognition.

In accordance with an aspect of the present disclosure, there is provided a method of processing an image based on user recognition in a user terminal, comprising: photographing a user using a second camera upon photographing through a first camera; recognizing the user based on the photographed user image; and performing predetermined image processing on an image photographed through the first camera according to the result of the user recognition.

Other aspects, advantages, and salient features of the disclosure will become apparent to those skilled in the art from the following detailed description, which, taken in conjunction with the annexed drawings, discloses exemplary embodiments of the disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a block diagram of a user terminal according to an exemplary embodiment of the present disclosure;
FIG. 2A illustrates a perspective view of a front part of a user terminal according to an exemplary embodiment of the present disclosure;
FIG. 2B illustrates a perspective view of a rear part of a user terminal according to an exemplary embodiment of the present disclosure;
FIG. 3 illustrates a flowchart of an image processing method in which a user terminal performs image processing based on user recognition, according to a first exemplary embodiment of the present disclosure;
FIG. 4 illustrates a flowchart of a process of inserting a watermark into a photographed image based on the result of user recognition, according to an exemplary embodiment of the present disclosure;
FIG. 5 illustrates a flowchart of a process of encoding a photographed image based on the result of user recognition, according to an exemplary embodiment of the present disclosure;
FIG. 6 illustrates a flowchart of a process of transmitting a photographed image to a sharing device to share the photographed image with the sharing device based on the result of user recognition, according to an exemplary embodiment of the present disclosure;
FIG. 7 illustrates a flowchart of a process of storing a photographed image based on the result of user recognition, according to an exemplary embodiment of the present disclosure;
FIG. 8 illustrates a flowchart of an image processing method in which a user terminal performs image processing based on user recognition, according to a second exemplary embodiment of the present disclosure;
FIG. 9 illustrates a flowchart of an image processing method in which a user terminal performs image processing based on user recognition, according to a third exemplary embodiment of the present disclosure; and
FIG. 10 illustrates an example in which user information is inserted into a header field of an image file, according to an exemplary embodiment of the present disclosure.

Throughout the drawings, like reference numerals will be understood to refer to like parts, components, and structures.

### DETAILED DESCRIPTION

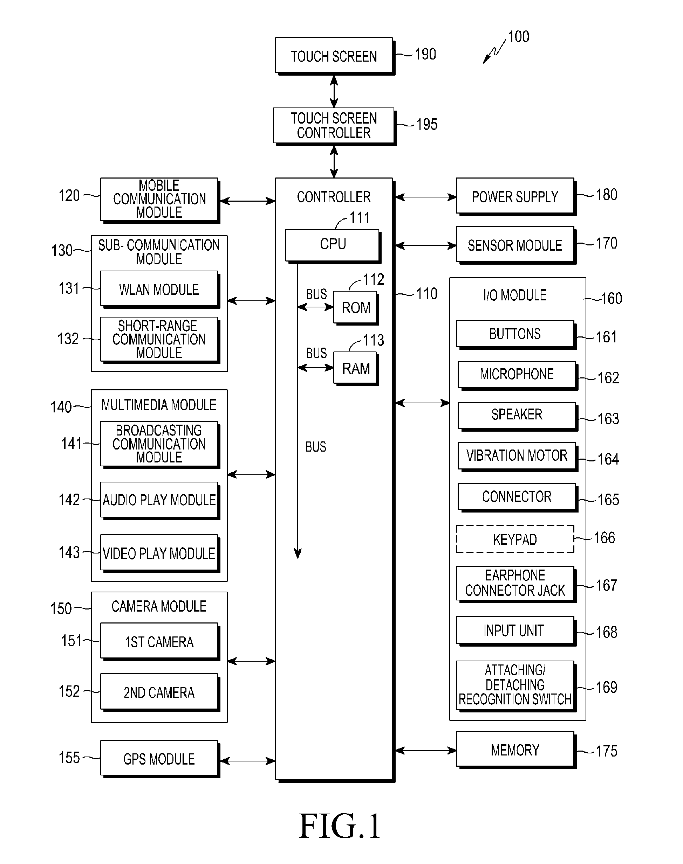

FIGURES 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device. The following description with reference to the accompanying drawings is provided to assist in a comprehensive understanding of exemplary embodiments of the disclosure as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the disclosure. Accordingly, it should be apparent to those skilled in the art that the following description of exemplary embodiments of the present disclosure is provided for illustration purposes only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the singular forms "a", "an" and "the" are intended to include the plural forms as well, unless the context clearly indicates otherwise.

FIG. 1 illustrates a block diagram of a user terminal according to an exemplary embodiment of the present disclosure. Referring to FIG. 1, a user terminal (hereinafter, also simply referred to as a "device") 100 may be connected to an external device (not shown) through a mobile communication module 120, a sub communication module 130, and a connector 165. The "external device" may be another device (not shown), a mobile phone (not shown), a smart phone (not shown), a tablet PC (not shown), or a server (not shown).

Referring to FIG. 1, the device 100 may include a touch screen 190 and a touch screen controller 195. Also, the device 100 includes a controller 110, a mobile communication module 120, a sub communication module 130, a multimedia module 140, a camera module 150, a Global Positioning System (GPS) module 155, an input/output module 160, a sensor module 170, a power supply unit 180, and a storage unit 175. The sub communication module 130 may include at least one of a Wireless Local Area Network (WLAN) module 131 and a short-range communication module 132, and the multimedia module 140 may include at least one of a broadcasting and communication module 141, an audio play module 142, and a video play module 143. The camera module 150 includes at least one of a first camera 151 and a second camera 152, and the input/output module 160 includes at least one of a plurality of buttons 161, a microphone 162, a speaker 163, a vibration motor 164, the connector 165, and a keypad 166.

The controller 110 may include a Central Processing Unit (CPU) 111, a Read Only Memory (ROM) 112 that stores control programs for controlling the device 100, and a Random Access Memory (RAM) 113 that stores signals/data received from an external device or tasks being executed by the device 100. The CPU 11 may be a single-core processor, a dual-core processor, a triple-core processor, or a quad-core processor. The CPU 111, the ROM 112, and the RAM 113 may be connected to each other through internal buses.

The controller 110 may control the mobile communication module 120, the sub communication module 130, the multimedia module 140, the camera module 150, the GPS module 155, the input/output module 160, the sensor module 170, the power supply unit 180, the storage unit 175, the touch screen 190, and the touch screen controller 195.

According to a first exemplary embodiment of the present disclosure, the controller 110 photographs a user using the second camera 152 upon photographing through the first camera 151 to thus recognize the user, and performs control required to perform predetermined image processing on the image photographed by the first camera 151 according to the result of the user recognition. For example, if the result of the user recognition matches pre-registered user information, the controller 110 causes a watermark to be inserted into the image photographed by the first camera 151 using the user information. As another example, if the result of the user recognition matches pre-registered user information, the controller 110 causes the image photographed by the first camera 151 to be encoded using encryption information corresponding to the user information. As another example, if the result of the user recognition matches pre-registered user information, the controller 110 causes the image photographed by the first camera 151 to be transmitted to a sharing device using sharing device information included in the user information so that the image is shared with the sharing device. As another example, if the recognition results of the user and the user's expression match pre-registered user information, the controller 110 causes the image photographed by the first camera 151 to be stored in a storage area corresponding to the pre-registered user information or at a storage location corresponding to a user's expression in the storage area corresponding to the pre-registered user information. According to a second exemplary embodiment of the present disclosure, the controller 110 photographs a user upon image processing to recognize the user, and provides the user with a right for processing a stored image according to whether a watermark of a pre-registered user matching the result of the user recognition is identical to a watermark included in the stored image. According to a third exemplary embodiment of the present disclosure, the controller 110 photographs a user upon image processing to recognize the user and the user's expression, inserts the recognition results of the user and the user's expression as expression information into an image photographed by the first camera 151, and then sets the resultant image to a preferred image or a non-preferred image according to the expression information.

The mobile communication module 120 enables the device 100 to connect to an external device through mobile communication using at least one (one or more) antenna (not shown) under the control of the controller 110. The mobile communication module 120 transmits/receives radio signals for voice calls, video calls, Short Message Service (SMS), Multimedia Messaging Service (MMS), or image data according to an embodiment of the present disclosure with a mobile phone (not shown), a smart phone, a table PC (not shown), or another device (not shown) having a phone number input to the device 100, to/from the device 100.

The sub communication module 130 may include, as described above, at least one of the WLAN module 131 and the short-range communication module 132. However, the sub communication module 130 may include only the WLAN module 131, only the short-range communication module 132, or both the WLAN module 131 and the short range communication module 132.

The WLAN module 131 may connect to the Internet at a place in which a wireless Access Point (AP) is installed, under the control of the controller 110. The WLAN module 131 supports IEEE802.11x. The short-range communication module 132 may perform short-range communication in a wireless manner between the device 100 and an imaging device (not shown) under the control of the controller 110. The short-range communication may include Bluetooth, Infrared Data Association (IrDA), and the like.

The device 100 may include at least one of the mobile communication module 120, the WLAN module 131, and the short-range communication module 132 according to performance. For example, the device 100 may include a combination of the mobile communication module 120, the WLAN module 131, and the short-range communication module 132, according to performance.

The multimedia module 140 may include, as described above, the broadcasting and communication module 141, the audio play module 142, or the video play module 143. The broadcasting and communication module 141 may receive a broadcasting signal (for example, a TV broadcasting signal, a radio broadcasting signal, or a data broadcasting signal) and broadcasting additional information (for example, an Electric Program Guide (EPS) or an Electric Service Guide (ESG)) transmitted from a broadcasting station through a broadcasting and communication antenna (not shown), under the control of the controller 110. For example, the audio play module 142 may reproduce a digital audio file (for example, a file having the filename extension of ".mp3", ".wma", ".ogg", or ".wav") that is stored or received under the control of the controller 110. The video play module 143 may reproduce a digital video file (for example, a file having the filename extension of ".mpeg", ".mpg" ".mp4", ".avi", ".mov", or ".mkv") or a digital audio file that is stored or received under the control of the controller 110.

However, the multimedia module 140 may include only the audio play module 142 and the video play module 143. The audio play module 142 and the video play module 143 of the multimedia module 140 may be included in the controller 100.

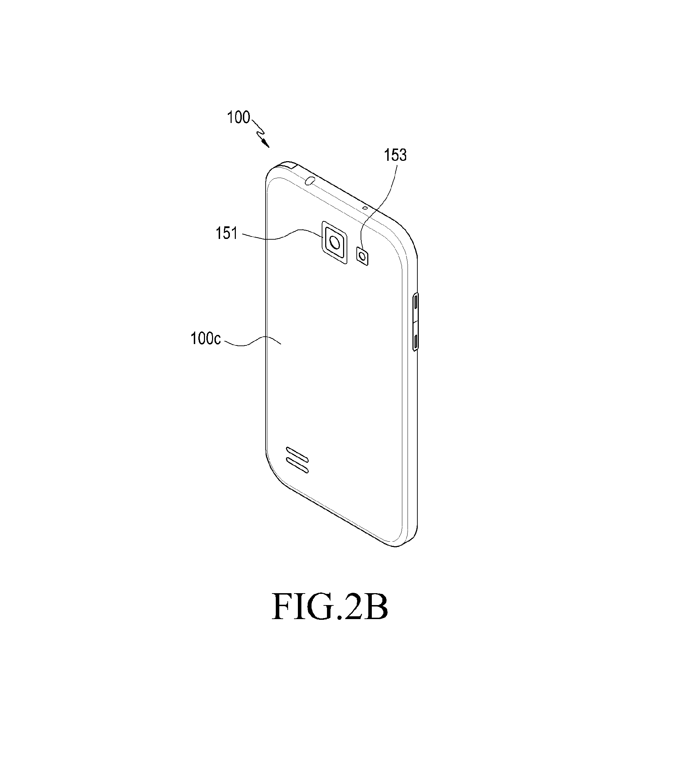

The camera module 150 may include at least one of the first camera 151 and the second camera 152 for photographing still images or moving images under the control of the controller 110. The first camera 151 or the second camera 152 may include an additional light source (for example, a flash (153 of FIG. 2B)) for providing an amount of light required for photographing. The first camera 151 may be disposed in the rear part of the device 100, and the second camera 152 may be disposed in the front part of the device 100.

The GPS module 155 may receive radio waves from a plurality of earth-orbiting GPS satellites (not shown), and calculate a position of the device 100 using a time of arrival taken for the radio waves from the GPS satellites to arrive at the device 100.

The input/output module 160 may include, as described above, at least one of the plurality of buttons 161, the microphone 162, the speaker 163, the vibration motor 164, the connector 165, and the keypad 166.

The buttons 161 may be provided in the front, side, and/or rear part of the housing of the device 100. The buttons 161 may include at least one of a power/lock button (not shown), volume buttons (not shown), a menu button (not shown), a home button (not shown), a back button (not shown), a search button (not shown).

The microphone 162 receives voice or sound under the control of the controller 110 to generate an electrical signal.

The speaker 163 may receive various signals (for example, a radio signal, a broadcasting signal, a digital audio file, a digital video file, or a photo file) from the mobile communication module 120, the sub communication module 130, the multimedia module 140, or the camera module 150, and output sound corresponding to the various signals to the outside of the device 100, under the control of the controller 110. Also, the speaker 163 may output sound (for example, ringtone for informing of call incoming, or ringback tone) corresponding to a function that is performed by the device 100. The speaker 163 may be provided as one or more units at an appropriate location (or locations) on the housing of the device 100.

The vibration motor 164 may convert an electrical signal into mechanical vibration under the control of the controller 110. For example, when the device 100 is in a vibration mode, the vibration motor 164 operates if a voice call is received from another device (not shown). The vibration motor 164 may be provided as one or more units in the housing of the device 100. The vibration motor 164 may operate in response to a user's touch operation of touching (or touching and dragging) the touch screen 190 or a user's touch-and-drag operation of touching and dragging the touch screen 190.

The connector 165 may be used as an interface for connecting the device 100 to an external device (not shown) or a power source (not shown). Data stored in the storage unit 175 of the device 100 may be transmitted to an external device (not shown) through a wired cable connected to the connector 165 under the control of the controller 110, or data of an external device (not shown) may be received through the wired cable connected to the connector 165, and stored in the storage unit 175 under the control of the controller 110. Also, the device 100 may receive power or charge battery from a power source (not shown) through the wired cable connected to the connector 165.

The keypad 166 may receive a key input from a user in order to control the device 100. The keypad 166 includes a physical keypad (not shown) that is provided on the device 100, or a virtual keypad (not shown) that is displayed on the touch screen 190. The device 100 may include no physical keypad according to the device's performance or structure.

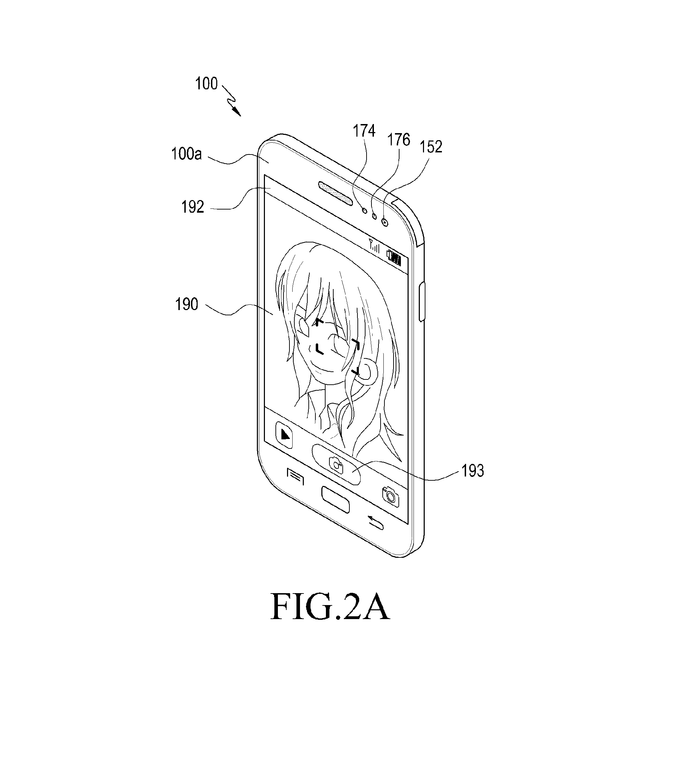

The sensor module 170 includes at least one sensor for detecting a status of the device 100. For example, the sensor module 170 may include a proximity sensor (176 of FIG. 2A) for determining whether a user approaches the device 100 or whether a finger or a pen 200 approaches the touch screen 190, an ambient light sensor (174 of FIG. 2A) for measuring an amount of ambient light around the device 100, or an acceleration sensor (not shown) for detecting motion (rotation, acceleration, or vibration) of the device 100. At least one sensor among the above-mentioned sensors may detect a state of the device 100, the state including a direction and a tilting angle of the device 100, generate a signal corresponding to the detected state, and transfer the signal to the controller 110. The sensor module 170 may further include other sensors than the above-mentioned sensors according to the performance of the device 100.

The power supply unit 180 may supply power to one or more batteries (not shown) installed in the housing of the device 100, under the control of the controller 110. The batteries (not shown) may supply power to the device 100. Also, the power supply unit 180 may supply power received from an external power source (not shown) through the wired cable connected to the connector 165 to the device 100.

The storage unit 175 may store signals or data that is input/output according to operations of the mobile communication module 120, the sub communication module 130, the multimedia module 140, the camera module 150, the GPS module 155, the input/output module 160, the sensor module 170, the touch screen 190, under the control of the controller 110. The storage unit 175 may store control programs and applications for controlling the device 100 or the controller 110.

In this disclosure, the term a "storage unit" includes the storage unit 175, the ROM 112 or RAM 113 included in the controller 110, and a memory card (not shown, for example, a Secure Digital (SD) card or a memory stick) installed in the device 100. The ROM 112 and ROM 113 may be included in the storage unit 175, instead of the controller 110. The storage unit 175 may include a non-volatile memory, a volatile memory, a Hard Disk Drive (HDD), or a Solid State Drive (SSD).

The touch screen 190 may provide a user with User Interfaces (UIs) corresponding to various services (for example, a call, data transmission, broadcasting, and photographing). The touch screen 190 may transfer an analog signal corresponding to at least one touch operation input through a UI to the touch screen controller 195. The touch screen 190 may sense at least one touch operation by various instruments, for example, a user's body part (for example, a finger including a thumb) or a pointing device (for example, a stylus pen). Also, the touch screen 190 may sense a touch-and-drag operation. In this case, the touch panel may transfer an analog signal corresponding to the touch-and-drag operation to the touch screen controller 195.

In this disclosure, a touch operation is not limited to a contact between the touch screen 190 and a user's body part or a pointing device, and includes a contactless touch operation. A distance detectable by the touch screen 190 may vary depending on the performance or structure of the device 100. The touch screen 190 may be a resistive type, a capacitive type, an infrared type, an Electro-Magnetic Resonance (EMR) type, an acoustic wave type, or a combination of two or more of the above-mentioned types.

Hereinafter, the external structure of the user terminal 100 as described above will be described. FIG. 2A illustrates a perspective view of a front part of a user terminal according to an exemplary embodiment of the present disclosure, and FIG. 2B is a perspective view illustrating a rear part of a user terminal according to an exemplary embodiment of the present disclosure.

Referring to FIG. 2A, the touch screen 190 is disposed in the front, center part 100a of the digital device 100. The touch screen 190 may occupy the major area of the front part of the digital device 100. Various images may be displayed on the touch screen 190. According to an exemplary embodiment of the present disclosure, when the first and second cameras 151 and 152 photograph subjects, a preview screen and a shutter key may be displayed on the touch screen 190. In a predetermined area of the front part of the user terminal 100, the second camera 152, the ambient light sensor 174, and the proximity sensor 176 may be disposed. The second camera 152 photographs subjects in front of the user terminal 100. Specifically, the second camera 152 may be used to photograph a user, for example, a user's face when the user stares at the touch screen 190 of the user terminal 100.

Referring to FIG. 2B, in the rear part 100c of the user terminal 100, the first camera 151 and the flash 153 may be disposed. The first camera 151 may be used to photograph subjects behind the user terminal 100. Accordingly, the first camera 151 may be used to photograph a subject behind the user terminal 100 while seeing a preview through the touch screen 190.

According to an exemplary embodiment of the present disclosure, the user terminal 100 may photograph a subject through at least one of the first and second cameras 151 and 152. Also, the user terminal 100 photographs a user through one of the first and second cameras 151 and 152 to recognize the user, and performs image processing on a photographed image according to the result of the user recognition. The current embodiments illustrate a case in which the second camera 152 which is a front camera photographs a user, and the first camera 151 which is a rear camera photographs a subject.

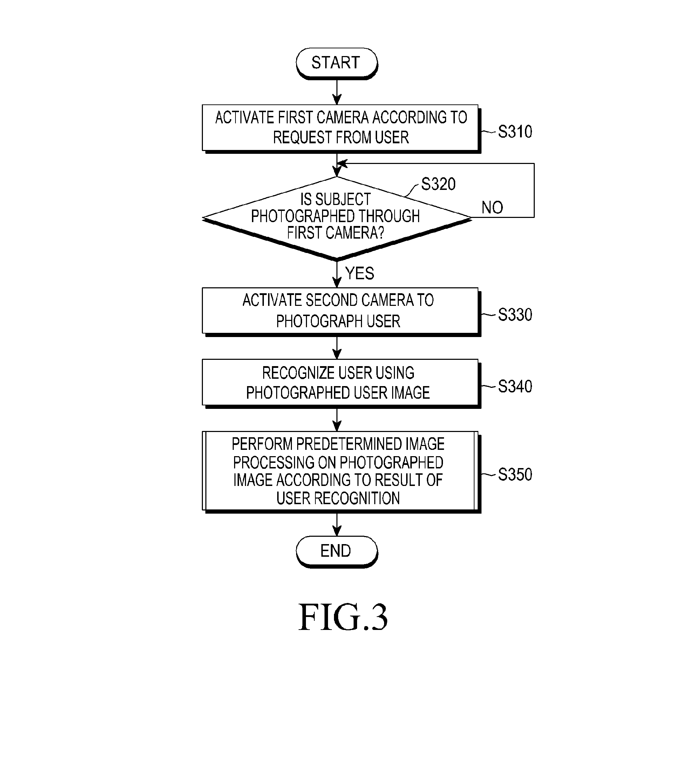

FIG. 3 illustrates a flowchart of an image processing method in which the user terminal 100 performs image processing based on user recognition, according to a first exemplary embodiment of the present disclosure. Referring to FIG. 3, a user may issue a request for activating a camera by pressing a camera button or the like of the user terminal 100 in order to photograph a subject. In this case, the user may request activation of the first or second camera 151 or 152 or activation of both the first and second cameras 151 and 152. The current embodiment illustrates a case of activating the first camera 151 which is a rear camera. The user terminal 100 activates the first camera 151 according to the request from the user (S310). If the first camera 151 is activated, the user terminal 100 may display a preview of an image captured through the first camera 151 on the touch screen 190. The user may press a shutter key while seeing the preview displayed on the touch screen 190, thereby photographing a subject.

The user terminal 100 photographs a subject through the first camera 151 when the shutter key is pressed (S310). Then, the user terminal 100 activates the second camera 152 to photograph the user (S330). The second camera 152 may be activated when the first camera 151 photographs the subject. Alternatively, the first and second cameras 151 and 152 may be simultaneously activated. Also, the second camera 152 for photographing the user may be activated when activation of the second camera 152 is requested by the user. Also, the second camera 152 for photographing the user may be activated when the user terminal 100 powers on. The second camera 152 for photographing the user may photograph the user's body part by which the user can be recognized, such as the user's face, upper body, or hand.

The user terminal 100 recognizes the user based on the photographed user's image (S340). For example, the user terminal 100 compares the photographed user's image to a pre-stored image for recognizing a user to thereby recognize the user. The pre-stored image for recognizing the user may be an image about the user's body part by which the user can be recognized, such as the user's face, upper body, or hand.

If the user is recognized based on the result of the user recognition, the user terminal 100 performs predetermined image processing on the photographed image according to the result of the user recognition (S350). The predetermined image processing may be inserting a watermark into the image, encoding the image, transmitting the image to an external sharing device to share the image with the external sharing device, storing the image, or the like.

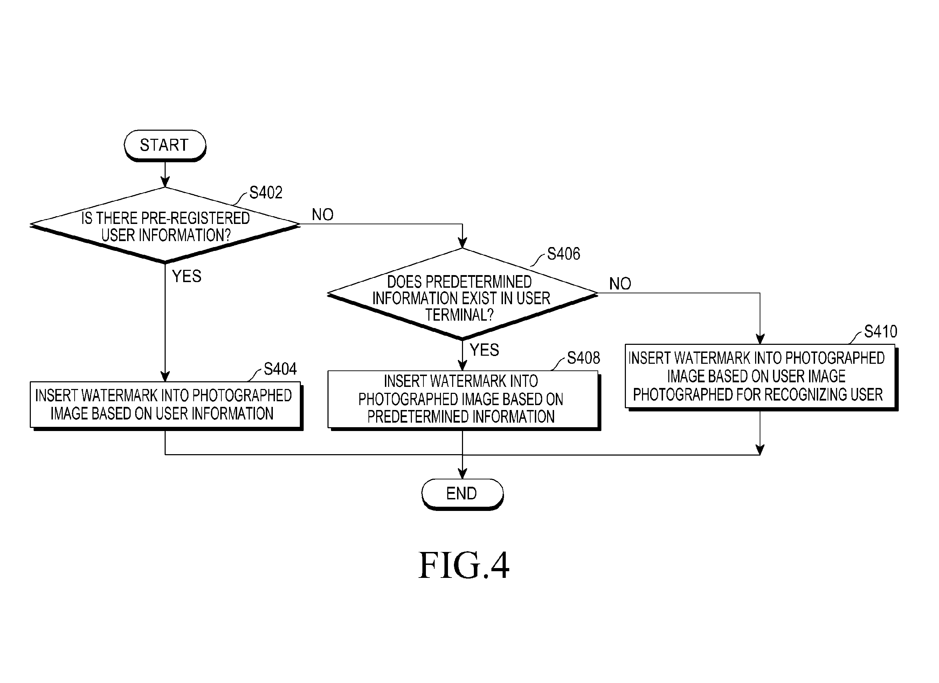

Exemplary embodiments in which the predetermined image processing is performed on the photographed image are illustrated in FIGS. 4 to 7. Hereinafter, a method in which the user terminal 100 inserts a watermark into the photographed image according to the result of the user recognition, a method in which the user terminal 100 encodes the photographed image according to the result of the user recognition, a method in which the user terminal 100 transmits the photographed image to an external sharing device to share the image with the external sharing device according to the result of the user recognition, and a method in which the user terminal 100 stores the photographed image according to the result of the user recognition will be described in detail.

FIG. 4 illustrates a flowchart of a process of inserting a watermark into a photographed image based on the result of user recognition, according to an exemplary embodiment of the present disclosure. Referring to FIG. 4, the user terminal 100 (see FIG. 1) determines whether there is pre-registered user information matching the result of user recognition (S402). For example, the user terminal 100 compares a photographed user image to images stored in advance for recognizing users to determine whether there is an image matching the photographed user image or having a predetermined degree of similarity to the photographed user image, among the stored images. If there is an image matching the photographed user image or having a predetermined degree of similarity to the photographed user image, among the stored images, the user terminal 100 determines that there is pre-registered user information. The pre-registered user information may include the user's picture (for example, a user's face, upper body, or hand), the user's identifier (ID), the user's phone number, and the like.

If there is pre-registered user information, the user terminal 100 inserts a watermark to the photographed user image using at least one piece of information of the user information (S404). For example, the user terminal 100 may create a watermark using at least one of the user's picture, the user's ID, and the user's phone number, and insert the created watermark into the photographed user image. The watermark may be a visible or invisible watermark.

If there is no pre-registered user information, the user terminal 100 determines whether predetermined information to be inserted as a watermark exists in the user terminal 100 (S406). If there is predetermined information to be inserted as a watermark, the user terminal 100 inserts a watermark into the photographed user image based on the predetermined information (S408). The predetermined information may be device information of the user terminal 100 or Subscriber Identity Module (SIM) information. If there is no predetermined information to be inserted as a watermark, the user terminal 100 creates a watermark based on the user image photographed for user recognition, and inserts the watermark into the photographed user image (S410).

According to the exemplary embodiment as described above, by recognizing a user when the user terminal 100 photographs a subject and inserting a watermark into the photographed image according to user information acquired through the user recognition, it is possible to represent the user's ownership for the photographed image.

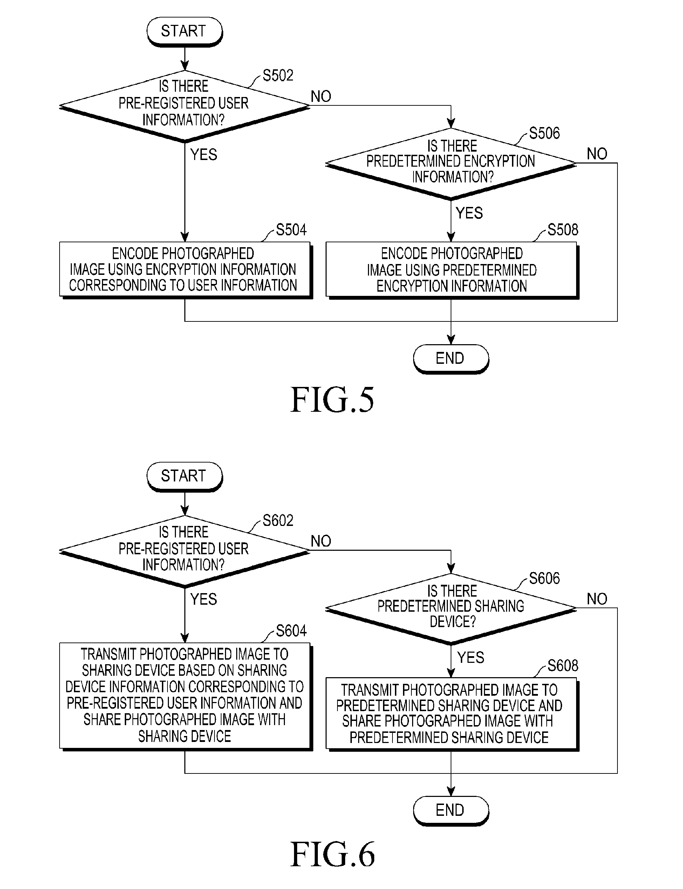

FIG. 5 illustrates a flowchart of a process of encoding a photographed image based on the result of user recognition, according to an exemplary embodiment of the present disclosure. Referring to FIG. 5, the user terminal 100 (see FIG. 1) determines whether there is pre-registered user information based on the result of user recognition (S502). For example, the user terminal 100 compares a photographed user image to images stored in advance for recognizing users to determine whether there is an image matching the photographed user image or having a predetermined degree of similarity to the photographed user image, among the stored images. If there is an image matching the photographed user image or having a predetermined degree of similarity to the photographed user image, among the stored images, the user terminal 100 determines that there is pre-registered user information. The pre-registered user information may include the user's picture (for example, the user's face, upper body, or hand), the user's ID, the user's phone number, and the like. Also, the user terminal 100 may store encryption information corresponding to the user information.

If there is pre-designated user information, the user terminal 100 encodes the photographed image using encryption information corresponding to the user information (S504). For example, the user terminal 100 may encode the photographed image by multiplying the photographed image by encryption information of a predetermined binarization pattern, and removing noise from the resultant image.

If there is no pre-designated user information, the user terminal 100 determines whether predetermined encryption information exists in the user terminal 100 (S506). If predetermined encryption information exists in the user terminal 100, the user terminal 100 encodes the photographed image using the predetermined encryption information (S508). The predetermined encryption information may be one of various types of well-known encryption information.

According to the exemplary embodiment as described above, by recognizing a user when the user terminal 100 photographs a subject and encoding the photographed image according to user information acquired through the user recognition, it is possible to enhance the security of the photographed image.

FIG. 6 illustrates a flowchart of a process of transmitting a photographed image to a sharing device to share the photographed image with the sharing device based on the result of user recognition, according to an exemplary embodiment of the present disclosure. Referring to FIG. 6, the user terminal 100 (see FIG. 1) determines whether there is pre-registered user information (S602). For example, the user terminal 100 compares a photographed user image to images stored in advance for recognizing users to determine whether there is an image matching the photographed user image or having a predetermined degree of similarity to the photographed user image, among the stored images. If there is an image matching the photographed user image or having a predetermined degree of similarity to the photographed user image, among the stored images, the user terminal 100 determines that there is pre-registered user information. The pre-registered user information may include the user's picture (for example, the user's face, upper body, or hand), the user's ID, the user's phone number, and the like. In addition, the user terminal 100 may store sharing device information corresponding to user information. The sharing device may be another terminal of the user or a web server.

If there is pre-registered user information, the user terminal 100 transmits the photographed image to the sharing device using the sharing device information corresponding to the user information, and shares the photographed image with the sharing device (S604). For example, the user terminal 100 may transmit the photographed image to a predetermined another terminal or a web server, and share the photographed image with the predetermined another terminal or the web server.

If there is no pre-registered user information, the user terminal 100 determines whether there is a predetermined sharing device (S606). If there is a predetermined sharing device, the user terminal 100 transmits the photographed image to the predetermined sharing device, and shares the photographed image with the predetermined sharing device (S608). According to the current exemplary embodiment of the present disclosure, by automatically transmitting a photographed image to a sharing device for each user, and sharing the photographed image with the sharing device, it is possible to improve a user's convenience.

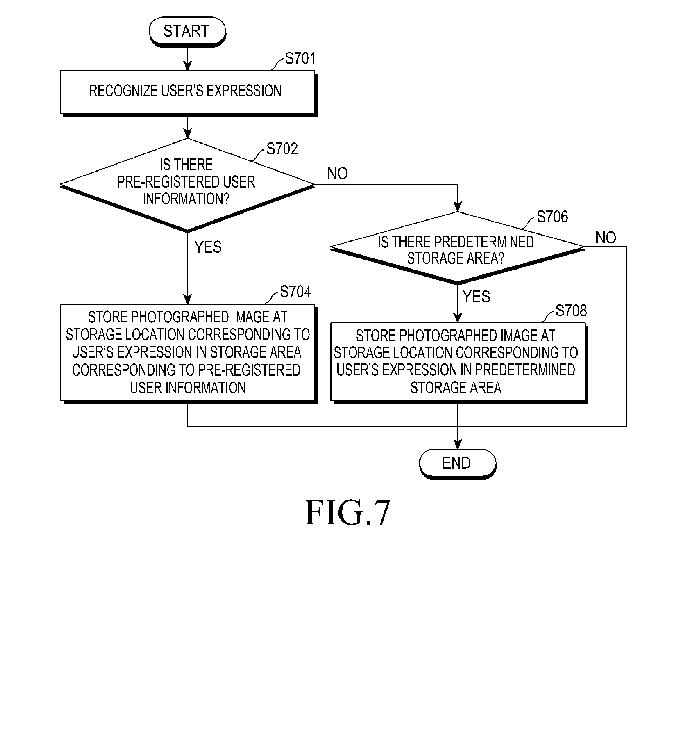

FIG. 7 illustrates a flowchart of a process of storing a photographed image based on the result of user recognition, according to an exemplary embodiment of the present disclosure. Referring to FIG. 7, the user terminal 100 compares a photographed image to images stored in advance for recognizing users to recognize a user, and then recognizes the recognized user's expression (S701). For example, the user terminal 100 compares a photographed user's face to pre-stored expression information for recognizing a user's expression to recognize the user's expression. The pre-stored expression information may include information regarding various expressions, such as a smiling expression, a crying expression, an angry expression, and a flown expression.

Then, the user terminal 100 determines whether there is pre-stored user information based on the recognition results of the user and the user's expression (S702). For example, the user terminal 100 compares a photographed user image to images stored in advance for recognizing users to determine whether there is an image matching the photographed user image or having a predetermined degree of similarity to the photographed user image, among the stored images. If there is an image matching the photographed user image or having a predetermined degree of similarity to the photographed user image, among the stored images, the user terminal 100 determines that there is pre-registered user information. The pre-registered user information may include the user's picture (for example, the user's face, upper body, or hand), the user's ID, the user's phone number, and the like. Also, the user terminal 100 may store storage area information corresponding to user information. The storage area information corresponding to the user information may include a storage location for each of at least one expression. The storage area may be a storage area in the storage unit 175 (see FIG. 1) of the user terminal 100 or a storage area of another storage unit (not shown).

If there is pre-registered user information, the user terminal 100 stores the photographed image at a storage location corresponding to the user's expression using the storage area information corresponding to the user information (S704). If the user's expression is recognized as a smiling expression, the user terminal 100 may store the photographed image at a storage location corresponding to a smiling expression in a storage area corresponding to the user information, and if the user's expression is recognized as a crying expression, the user terminal 100 may store the photographed image at a storage location corresponding to a crying expression in the storage area corresponding to the user information.

If there is no pre-registered user information, the user terminal 100 determines whether there is a predetermined storage area (S706). The predetermined storage area may be a predetermined storage area in the user terminal 100 regardless of the user information. If there is a predetermined storage area, the user terminal 100 stores the photographed area at a storage location corresponding to the user's expression in the predetermined storage area (S708). According to the current embodiment of the present disclosure, by storing an image at a predetermined storage location for each user and for each user expression, it is possible to manage images for each expression.

Meanwhile, in the first exemplary embodiment as described above, a configuration for performing predetermined image processing on a photographed image according to the result of user recognition has been described, however, in second and third exemplary embodiments of the present disclosure which will be described below, stored images may be processed according to the result of user recognition.

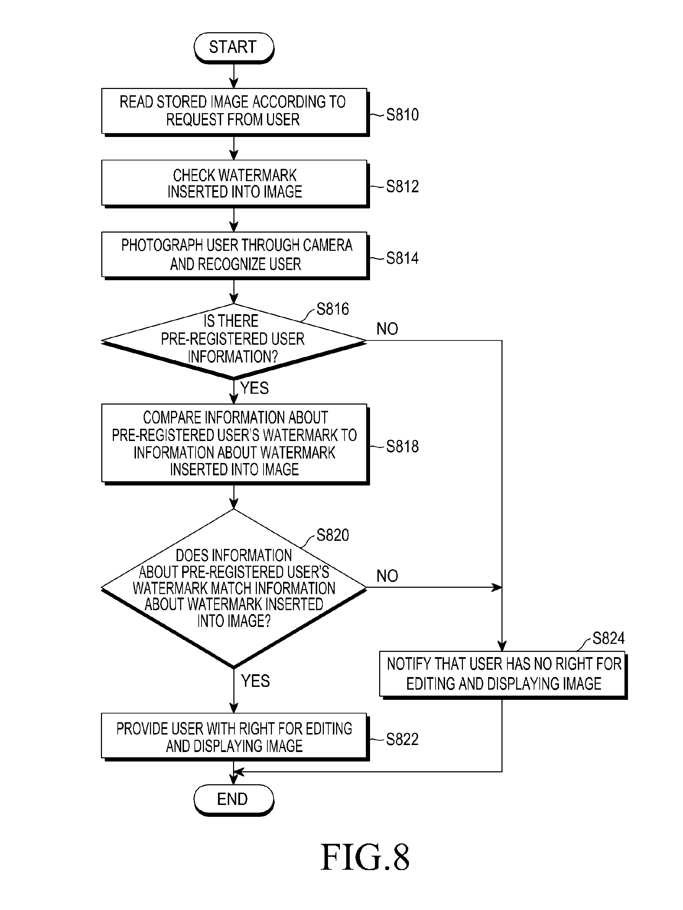

FIG. 8 illustrates a flowchart of an image processing method in which the user terminal 100 (see FIG. 1) performs image processing based on user recognition, according to a second exemplary embodiment of the present disclosure. Referring to FIG. 8, a user selects an image stored in the user terminal 100 and requests the user terminal 100 to send the stored image in order to edit or reproduce the stored image. The user terminal 100 reads the stored image according to the request from the user (S810).

Then, the user terminal 100 checks a watermark included in the image (S812). For example, the user terminal 100 determines whether a watermark has been inserted into the image. If a watermark has been inserted into the image, the user terminal 100 photographs the user through a camera to recognize the user (S814). For example, the user terminal 100 photographs a user, and compares the photographed image to a pre-stored image for recognizing a user to thus recognize the user. The pre-stored image may be an image by which the user can be recognized, such as the user's face image, the user's upper body image, or the user's hand image.

If the user is recognized based on the result of user recognition, the user terminal 100 determines whether there is pre-registered user information (S816). For example, the user terminal 100 compares a photographed user image to images stored in advance for recognizing users to determine whether there is an image matching the photographed user image or having a predetermined degree of similarity to the photographed user image, among the stored images. If there is an image matching the photographed user image or having a predetermined degree of similarity to the photographed user image, among the stored images, the user terminal 100 determines that there is pre-registered user information. The pre-registered user information may include the user's picture (for example, the user's face, upper body, or hand), the user's ID, the user's phone number, and the like. Also, the pre-registered user information may include information about the corresponding user's watermark.

The user terminal 100 compares information about a pre-registered user's watermark to information about the watermark inserted into the image (S818). That is, the user terminal 100 determines whether the information about the pre-registered user's watermark matches the information about the watermark inserted into the image (S820). If the information about the pre-registered user's watermark matches the information about the watermark inserted into the image, the user terminal 100 provides the user with a right for editing and reproducing the image (S822). If the information about the pre-registered user's watermark does not match the information about the watermark inserted into the image, the user terminal 100 notifies that the user has no right for editing and reproducing the image (S824). According to the second exemplary embodiment as described above, by providing a user with a right for processing an image only when user information included in the image matches user information acquired through user recognition upon image processing by the user terminal 100, it is possible to prevent images from being illegally used and processed.

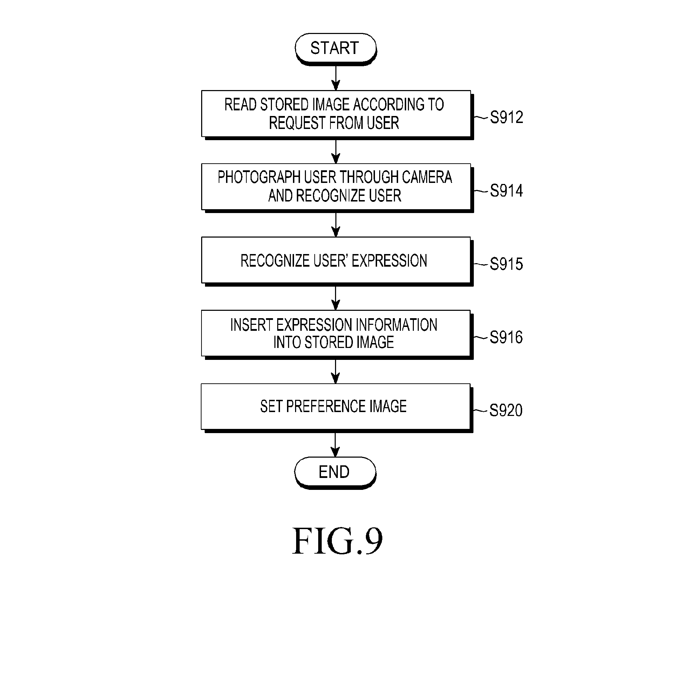

FIG. 9 illustrates a flowchart of an image processing method in which the user terminal 100 performs image processing based on user recognition, according to a third exemplary embodiment of the present disclosure. Referring to FIG. 9, a user selects an image stored in the user terminal 100 and requests the user terminal 100 to send the stored image in order to edit or reproduce the stored image. The user terminal 100 reads the stored image according to the request from the user (S912).

Then, the user terminal 100 photographs the user through a camera to recognize the user (S914). For example, the user terminal 100 compares the photographed image to a pre-stored image for recognizing a user to thus recognize the user. The pre-stored image may be an image by which the user can be recognized, such as the user's face picture, the user's upper body picture, or the user's hand picture.

After the user is recognized based on the result of the user recognition, the user terminal 100 recognizes the user's expression. For example, the user terminal 100 may compare the photographed user's face to pre-stored expression information in order to recognize the user's expression (S915). The pre-stored expression information may include information regarding various expressions, such as a smiling expression, a crying expression, an angry expression, and a flown expression.

Then, the use terminal 100 inserts the user's expression information into the image (S916). The user's expression information is information about the recognized user, and may be inserted into a header field of the photographed image.

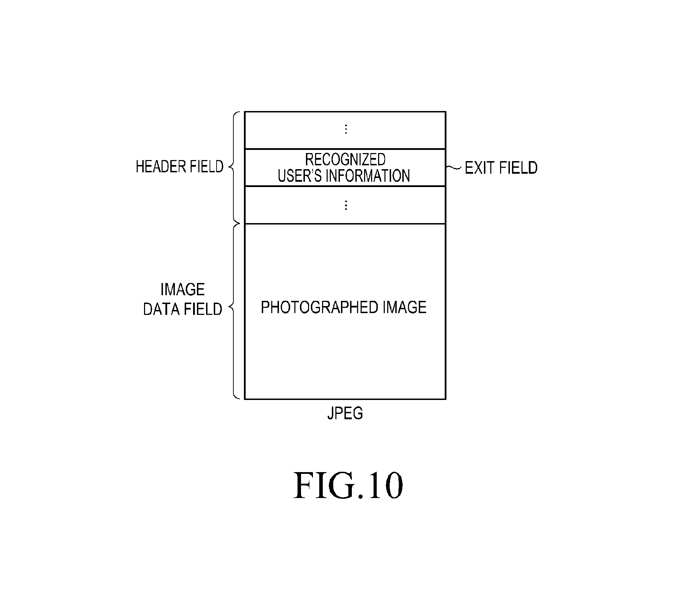

For example, FIG. 10 illustrates a case in which user information is inserted into a header field of an image file, according to an exemplary embodiment of the present disclosure. FIG. 10 illustrates a case in which a photographed image is stored as a JPEG file. Referring to FIG. 10, the photographed image may be stored in an image data file of a JPEG file, and the recognized user information, that is, the user's expression information may be inserted into a header field (specifically, an EXIF field) of the JPEG file.

Accordingly, an image file for the photographed image may include the user's expression information representing whether the user uses the photographed image with a smiling expression, a crying expression, etc. In the case of a still image, an image file for the still image may include one piece of expression information, and in the case of a moving image, an image file for the moving image may include a plurality of pieces of expression information for a plurality of still images constructing the moving image, or include a plurality of pieces of expression information for a plurality of sections constructing the moving image.

The user terminal 100 sets an image with a smiling expression of images including expression information, to a preference image (S920). In the case of a still image, the still image may be set to a preference image. In the case of a moving image, a still image with a smiling expression of a plurality of still images constituting the moving picture may be set to a preference image, or a predetermined section with a smiling expression may be set to a preference image section. According to the third exemplary embodiment as described above, by recognizing a user with respect to an image stored in the user terminal 100 and setting a preference of the corresponding image according to the user's expression, it is possible to set images to preferred images or to non-preferred images.

According to the exemplary embodiments of the present disclosure, by recognizing a user through a user terminal, and performing image processing on the photographed image using the result of the user recognition, it is possible to protect a user's copyright for photographed images and also to use user information for various purposes by associating the user information with photographed images. Also, according to the exemplary embodiments of the present disclosure, by recognizing a user upon photographing a subject through a user terminal, and encoding the photographed image or inserting a watermark into the photographed image according to user information acquired through the user recognition, it is possible prevent the photographed image from being used without permission by other persons. Also, according to the exemplary embodiments of the present disclosure, by recognizing a user upon photographing a subject through a user terminal, and storing the photographed image in a storage area corresponding to the user's information or the user's expression, it is possible to manage images for each user or for each user expression. Also, according to the exemplary embodiments of the present disclosure, by recognizing a user upon photographing a subject through a user terminal, and transmitting the photographed image to a sharing device corresponding to user information acquired through the user recognition to share the photographed image with the sharing device so that photographed images are automatically shared with a sharing device for each user, a user's convenience may be improved. Also, according to the exemplary embodiments of the present, by recognizing a user upon image processing through a user terminal, and providing the user with a right for processing the image only when user information included in the image matches user information acquired through the user recognition, it is possible to prevent images from being illegally used and processed. Also, according to the exemplary embodiments of the present disclosure, by recognizing a user upon image processing through a user terminal, and setting the corresponding image to a preferred or non-preferred image according to the user's expression, it is possible to set images to preferred images or to non-preferred images.

The methods according to the exemplary embodiments of the present disclosure may be implemented in the form of program instructions that can be performed through a variety of computer components, and recorded in a computer-readable recording medium. The computer-readable recording medium may include, alone or in combination with the program instructions, data files, data structures. The computer-readable recording medium recorded program instructions or things designed and constructed specifically for the present disclosure are known to those skilled in the art in the field of computer software may be available.

Although the present disclosure has been described with an exemplary embodiment, various changes and modifications may be suggested to one skilled in the art. It is intended that the present disclosure encompass such changes and modifications as fall within the scope of the appended claims.

## Claims

1. A user terminal (100) comprising:
a first camera (151) and a second camera (152) configured to photograph a subject; and
a controller (110) configured to control the second camera to photograph a user upon photographing through the first camera, recognize the user, and perform predetermined image processing on an image photographed through the first camera according to a result of recognizing the user.

2. The user terminal of claim 1, wherein in response to identifying pre-registered user information matching the result of recognizing the user, the controller is configured to insert a watermark into the photographed image based on the pre-registered user information.

3. The user terminal of claim 1, wherein in response to identifying pre-registered user information matching the result of recognizing the user, the controller is configured to encode the photographed image based on encryption information corresponding to the pre-registered user information.

4. The user terminal of claim 1, wherein in response to identifying pre-registered user information matching the result of recognizing the user, the controller is configured to cause a transmitter to transmit the photographed image to a sharing device based on sharing device information corresponding to the user information to share the photographed image with the sharing device.

5. The user terminal of claim 1, further comprising:
a storage unit,
wherein the controller is configured to recognize an expression of the user, and in response to identifying pre-registered user information based on the results of recognizing the user and the expression of the user, the controller is configured to store the photographed image at a storage location corresponding to the expression of the user in a storage area in the storage unit corresponding to the pre-registered user information.

6. The user terminal of claim 1, wherein the controller is configured to recognize an expression of the user, and insert information about the recognized expression of the user into a header field of the photographed image.

7. The user terminal of one of claims 1 through 6, wherein the first camera is a rear camera, and the second camera is a front camera.

8. A method of processing an image based on user recognition in a user terminal, the method comprising:
photographing (S330) a user using a second camera (152) upon photographing through a first camera (151);
recognizing (S340) the user based on the photograph of the user; and
performing (S350) predetermined image processing on an image photographed through the first camera according to a result of recognizing the user.

9. The method of claim 8, wherein performing the predetermined image processing comprises:
determining whether pre-registered user information matching the result of recognizing the user is present; and
inserting, in response to identifying the pre-registered user information matching the result of recognizing the user, a watermark into the photographed image based on the pre-registered user information.

10. The method of claim 8, wherein performing the predetermined image processing comprises:
determining whether pre-registered user information matching the result of recognizing the user is present; and
encoding, in response to identifying pre-registered user information matching the result of recognizing the user, the photographed image based on encryption information corresponding to the pre-registered user information.

11. The method of claim 8, wherein performing the predetermined image processing comprises:
determining whether pre-registered user information matching the result of recognizing the user is present; and
transmitting, in response to identifying pre-registered user information matching the result of recognizing the user, the photographed image to a sharing device based on sharing device information corresponding to the user information to share the photographed image with the sharing device.

12. The method of claim 8, wherein the performing of the predetermined image processing comprises:
recognizing an expression of the user;
determining whether pre-registered user information matching the result of recognizing the user is present; and
storing, in response to identifying pre-registered user information matching the results of recognizing the user and the expression of the user, the photographed image at a storage location corresponding to the expression of the user in a storage area corresponding to the pre-registered user information.

13. The method of claim 8, wherein the performing of the predetermined image processing comprises:
recognizing an expression of the user; and
inserting information about the recognized expression of the user into a header field of the photographed image, and storing the information about the recognized expression of the user in the header field of the photographed image.

14. The method of one of claims 8 to 13, wherein the first camera is a rear camera, and the second camera is a front camera.
